# EUROPÄISCHE PATENTANMELDUNG

(11) **EP 4 752 180 A1**
(43) Veröffentlichungstag der Anmeldung: **03.06.2026**
(21) Anmeldenummer: 24216637.9
(22) Anmeldetag: 29.11.2024
(51) Int. Cl.: C09D 13/00, B43K 19/00

(54) **FARBSTIFTMINE, GRAPHITMINE, FARB- ODER GRAPHITKREIDE**

(71) Anmelder: Faber- Castell AG, 90546 Stein (DE)
(72) Erfinder: von Godin, Harald, 90522 Oberasbach (DE); Lugert, Gerhard, 90431 Nürnberg (DE)
(74) Vertreter: Meissner Bolte Nürnberg

(57) **Zusammenfassung**

Die Erfindung betrifft eine Farbstiftmine, Graphitmine, Farb- oder Graphitkreide zum Malen und/oder Zeichnen mit einer Minengrundmasse enthaltend Wachse, zumindest einen Füllstoff und zumindest ein Farbmittel, wobei in der Minengrundmasse ferner Aluminiumdistearat und als Wachs zumindest ein funktionalisiertes Metallocen-Polyolefinwachs und zumindest ein gehärtetes Wachs enthalten ist.

## Beschreibung

Die Erfindung betrifft eine Farbstiftmine, Graphitmine, Farb- oder Graphitkreide zum Malen und/oder Zeichnen mit einer Minengrundmasse enthaltend Wachse, zumindest einen Füllstoff, zumindest ein Farbmittel und Aluminiumdistearat.

Aus dem Stand der Technik sind wasserfeste Minen oder Kreiden bekannt, die mittels Extrusionsverfahren aus einer Minengrundmasse enthaltend Fette und/oder Wachse, Füllstoffe und Farbpigmente sowie gegebenenfalls weitere Additive, hergestellt werden.

Die EP 2 520 442 B1 beschreibt beispielsweise wasserfeste Minen, die Aluminiumdistearat, oxydiertes Polyethylenwachs und Fettsäurederivate enthalten. Diese Minen sind zwar gut für einfache Farbstifte geeignet, jedoch nicht weich applizierbar und zeigen wenig deckende Eigenschaften beim Aufstrich auf einer Maluntergrund.

Aus der EP 3 772 532 B1 sind wasserfeste Minen bekannt, die oxidiertes Ethylen Vinylacetat Wachs (EVA) und zumindest ein funktionalisiertes Metallocen-Polyolefinwachs enthalten. Diese Farbstiftminen zeigen zwar etwas verbesserte Eigenschaften gegenüber den aus EP 2 520 442 B1 bekannten Minen in Bezug auf Weichheit, entsprechen jedoch nicht den Erwartungen für sehr hochwertige Farbstiftminen, die insbesondere für Künstlerstifte und andere hochwertige Farbstiftminen gewünscht werden.

Es ist daher wünschenswert, Zusammensetzungen für wasserfeste Farbstiftminen, Graphitminen, Farb- oder Graphitkreiden zu entwickeln, die gegenüber Minen nach dem Stand der Technik weicher zu applizieren sind und mittels derer bei der Applikation größere Mengen an Minenmasse auf dem Maluntergrund (Papier, Karton oder Holz) aufgetragen werden können. Zudem sollte eine bessere Deckfähigkeit beim Übermalen von verschiedenen Farben möglich sein ohne, dass sich die mechanischen Eigenschaften wie Bruchfestigkeiten im Vergleich zum Stand der Technik verschlechtern.

Es ist daher Aufgabe der Erfindung Farbstiftminen, Graphitminen, Farb-oder Graphitkreiden, insbesondere eine wasserfeste Farbstiftminen, Graphitminen, Farb- oder Graphitkreiden, zum Malen und/oder Zeichnen anzugeben, die ein weiches Applikationsverhalten sowie einen deckenden Aufstrich zeigen und zudem effektiv mittels Extrusionsverfahren hergestellt werden können.

Die Aufgabe wird gelöst mit einer Farbstiftmine, Graphitmine, Farb- oder Graphitkreide, insbesondere einer wasserfesten Farbstiftmine, Graphitmine, Farb- oder Graphitkreide, zum Malen und/oder Zeichnen mit den Merkmalen gemäß Anspruch 1. Die Farbstiftmine, Graphitmine, Farb-oder Graphitkreide weist eine Minengrundmasse enthaltend Wachse, zumindest einen Füllstoff und zumindest ein Farbmittel auf. Erfindungsgemäß ist in der Minengrundmasse ferner Aluminiumdistearat enthalten und als Wachse sind zumindest ein funktionalisiertes Metallocen-Polyolefinwachs und zumindest ein gehärtetes Wachs, gehärtetes Öl oder gehärtetes Fett, enthalten. Denkbar sind somit auch Wachsmischungen.

Aus Vereinfachungsgründen wird im Folgenden vorwiegend von Farbstiftminen oder Minen gesprochen.

Eine Vielzahl von Versuchen führte zu dem Ergebnis, dass eine Kombination von Aluminiumdisteart mit funktionalisiertem Metallocen-Polyolefinwachs und gehärtetem Wachs / gehärtetem Öl / gehärtetem Fett zu besonders weich applizierbaren Minen führen, die zudem ein verbessertes Deckvermögen gegenüber dem beschriebenen Stand der Technik aufzeigen. Dies war überraschend, da in einer Kombination von Bestandteilen der relativ hart und farbschwach applizierbaren Minen aus EP 2 520 042 B1 mit Bestandteilen einer zwar verbesserten, jedoch nicht ausreichend weichen, herstellbaren Mine aus EP 3 772 532 B1 eine in den Applikationseigenschaften gegenüber beiden zum Stand der Technik zitierten Schutzrechte deutlich verbesserte Mine entwickelt werden konnte.

Unter gehärteten Wachsen / Ölen / Fetten sind solche Wachse oder Öle oder Fette zu verstehen, die einem Verfahren der "Fetthärtung" unterzogen wurden. Dabei werden Öle oder niedrige schmelzende Wachse hydriert und vorhandene Doppelbindungen gesättigt. Dadurch steigt zum einen der Schmelzbereich des "behandelten" Wachses/Öls. Zudem "verharzen" die hydrierten Wachse deutlich weniger als unhydrierte Wachse.

Für das Eigenschaftsprofil der Mine hat es sich als ausreichend erwiesen, wenn das Aluminiumdistearat mit einem Anteil von 0,4 bis 10,0 Gew.-% in der Minengrundmasse enthalten ist.

Das funktionalisierte Metallocen-Polyolefinwachs ist vorzugsweise mit einem Anteil von 5,0 bis 25,0 Gew.-% in der Minengrundmasse enthalten.

Das zumindest eine funktionalisierte Metallocen-Polyolefinwachs weist vorzugsweise einen Tropfpunkt zwischen 120 und 160 °C (ISO 2176) und eine Säurezahl zwischen 16 und 50 mg KOH/g (ISO 2114) auf.

Insbesondere ist als funktionalisiertes Metallocen-Polyolefinwachs Ethylen-Maleinsäureanhydrid Copolymer (CAS Nr. 9006-26-2) oder Propylen-Maleinsäureanhydrid Copolymer (CAS Nr. 25722-45-6) enthalten ist. Solche funktionalisierten Metallocen-Polyolefinwachse sind beispielsweise unter den Handelsnamen Licocene PP MA 6252²⁾ (Tropfpunkt: 137 - 142°C; Säurezahl: 38 - 45 mg KOH/g), Licocene PE MA 4221²⁾ (Tropfpunkt: 120 - 126°C; Säurezahl: 16 - 20 mg KOH/g) Licocene PE MA 4351²⁾ (Tropfpunkt: 120 - 126°C; Säurezahl: 42 - 49 mg KOH/g) erhältlich.

Das gehärte Wachs oder die gehärtete Wachsmischung weist vorzugsweise einen Tropfpunkt zwischen 50 und 120 °C (ISO 2176) und eine Säurezahl zwischen 1 und 11 mg KOH/g (ISO 2114) auf.

Gemäß bevorzugten Ausführungsformen werden gehärtete Wachse oder gehärtete Öle oder gehärtete Fette aus Palmwachs, Rapswachs, Sonnenblumenwachs, Sojawachs, Esterwachs, synthetisches Bienenwachs, Mantanwachs Paraffinwachs, Naturwachse, Carnaubawachs und / oder hydriertes Rhizinusöl aber auch gehärtete pflanzliche Trigylceride mit wachsähnlichen Strukturen auf Basis der aufgeführten Wachse genannt. Denkbar ist auch die Beimischung von nicht gehärteten Wachsen. Ein solches gehärtetes Wachs ist beispielsweise unter dem Handelsnamen Polycerin 9548 ¹⁾ (Tropfpunkt: 65 - 72°C; Säurezahl: max. 3 mg KOH/g) erhältlich. Als weitere Beispiele seien das unter dem Handelsnamen Polycerin 9542 ¹⁾ (Tropfpunkt: 68 - 72°C; Säurezahl: max. 3 mg KOH/g) Polycerin RD ¹⁾ (Tropfpunkt: 55 - 61°C; Säurezahl: max. 3 mg KOH/g) erhältliche Wachs genannt.

Das gehärtete Wachs oder die gehärtete Wachsmischung ist vorzugsweise mit einem Anteil von 2,0 bis 30,0 Gew.-% in der Minengrundmasse enthalten.

Ein Anteil der Farbstiftmine, Graphitmine, Farb- oder Graphitkreide wird durch zumindest einen Füllstoff gebildet, wobei sich ein Einsatz des zumindest einen Füllstoffes mit einem Anteil von 5,0 bis 80 Gew.-% in der Minengrundmasse als vorteilhaft herausgestellt hat.

Als Füllstoffe sind insbesondere anorganische, fein pulverisierte Füllstoffe, insbesondere Talkum, Bimsmehl, Kaolin, Glimmer (Mica), Aluminiumsilikat, Ton und/oder Calciumcarbonat geeignet, da diese aufgrund ihrer Polarität in der Minengrundmasse besonders gut gebunden werden.

Als Farbmittel ist insbesondere zumindest ein Farbstoff und/oder zumindest ein anorganisches Pigment und/oder zumindest ein organisches Pigment in der Minengrundmasse enthalten, wobei anorganische und/oder organische Pigmente gegenüber Farbstoffen bevorzugt sind. Als anorganische Pigmente sind beispielsweise Titandioxid, Manganviolett, Ultramarin, Ferriferrocyanid, Eisenoxide, Ruß oder Metallpigmente, z.B. Aluminium enthalten. Organische Pigmente sind vorzugsweise ausgewählt aus der Gruppe der Phthalocyanin-, Azo-, Chinacridon-, Isoindoline-, Diketopyrrolopyrrol-Pigmente.

Als vorteilhafte Einsatzkonzentration für das zumindest eine Farbmittel hat sich ein Anteil von 0,1 - 50 Gew.-%, insbesondere ein Anteil von 0,1 - 40 Gew.-%, besonders bevorzugt ein Anteil von 0,1 - 30 Gew.-% in der Minengrundmasse herausgestellt.

Schließlich ist es noch von Vorteil, wenn in der Minengrundmasse zumindest ein Additiv, insbesondere ein Gleitmittel und/oder ein Dispergierhilfsmittel, z.B. CAS 85711-47-3, CAS 108-31-6, CAS 398475-96-2, CAS 57472-68-1, CAS 14431-03-8 enthalten ist. Als Gleitmittel können hier exemplarisch Salze von Fettsäuren wie Calciumstearat, Magnesiumstearat, Zinkstearat, Natriumstearat oder Magnesiummyristat genannt werden.

Vorzugsweise ist der Anteil des Additivs in der Minengrundmasse auf maximal 5,0 Gew.-% begrenzt.

Die Farbstiftminen sind wasserfest und lassen sich in einem zwei-stufigen-Prozess herstellen. Die Rohmaterialien der Mine bzw. die Bestandteile der Minengrundmasse lassen sich bereits bei geringen Temperaturen von etwa 110 bis 140°C vermischen und extrudieren. Dabei kommt es zu einer Erweichung der beiden Wachse bis zu einer Konsistenz, die so beschaffen ist, dass sich trotz der ferner enthaltenen Füllstoffe und Farbpigmente Minenstränge mit einem Durchmesser von 3 bis 5 mm für Farbstiftminen und bis zu 20 mm für Farbkreiden extrudieren lassen.

Die Farbstiftmine ist somit aus einer die genannten Komponenten bzw. Ausgangsstoffe enthaltenen Minengrundmasse bzw. Minen-Ausgangsmasse hergestellt, die thermoplastisch verarbeitet und extrudiert wird, um die Ausgangsstoffe aufzuschmelzen und zu binden. Die daraus erhaltenen Minenstränge werden gegebenenfalls anschließend abgelängt. Nach dem Erkalten der Minenmasse liegt bereits die fertige Mine vor, ein aufwändiges Entfernen von Wasser ist nicht erforderlich.

Zusammenfassend lässt sich für die erfindungsgemäße Farbstiftmine, Graphitmine, Farb- oder Graphitkreide folgende Basisrezeptur angeben:

| | |
|---|---|
| Aluminiumdistearat | 0,4 - 10,0 Gew.-% |
| Funktionalisiertes Metallocen-Polyolefinwachs | 5,0 - 25,0 Gew.-% |
| Gehärtetes Wachs / Wachsmischung | 2,0 - 30,0 Gew.-% |
| Füllstoffe | 5,0 - 80,0 Gew.-% |
| Farbmittel | 0,1 - 50 Gew.-% |
| Additive | bis 5,0 Gew.-% |

Nachfolgend sind sechs Beispielrezepturen angeführt. Die Angaben in den Beispielrezepturen in Gewichtsprozent beziehen sich jeweils auf die Anteile in der Minengrundmasse. Die Herstellung der Minen oder Kreiden erfolgt in einem zwei-stufigen-Prozess. Zunächst werden die Rohmaterialien in Schnellmischern oder Knetern oder Compoundierextrudern bei Mischtemperaturen von 110 - 140°C gemischt und homogenisiert. Nach dem Mischen wird durch Abkühlen der homogenen Masse ein bei Raumtemperatur festes Granulat erhalten, falls notwendig erfolgt zusätzlich ein mechanisches Zerkleinern. Das so erhaltene Granulat wird anschließend einem Extruder, beispielsweise Schneckenextrudern, zugeführt und es erfolgt die Ausformung der Minen bzw. Kreiden in den Schneckenextrudern bei Temperaturen von 130 - 140 °C. Dabei wird die Minengrundmasse zu Minensträngen extrudiert, die anschließend abgelängt werden.

### Beispiel 1A:

Beispielrezeptur für eine blaue Farbstiftmine mit einem Durchmesser von 4,0 mm:

| | |
|---|---|
| Aluminiumdistearat (CAS-Nr. 300-92-5) | 1,2 Gew.-% |
| Ethylen-Maleinsäureanhydrid Copolymer (CAS-Nr. 9006-26-2) | 9,5 Gew.-% |
| Hartes pflanzliches Wachs Polycerin 9548¹⁾ | 12,3 Gew.-% |
| Glimmer | 15,0 Gew.-% |
| Kaolin | 57,0 Gew.-% |
| Pigment Blue 15:1, CI 74160 | 5,0 Gew.-% |

### Beispiel 1B:

Beispielrezeptur für eine rote Farbstiftmine mit einem Durchmesser von 4,0 mm:

| | |
|---|---|
| Aluminiumdistearat (CAS-Nr. 300-92-5) | 1,1 Gew.-% |
| Ethylen-Maleinsäureanhydrid Copolymer (CAS-Nr. 9006-26-2) | 9,1 Gew.-% |
| Hartes pflanzliches Wachs Polycerin 9548¹⁾ | 11,8 Gew.-% |
| Glimmer | 15,0 Gew.-% |
| Kaolin | 58,0 Gew.-% |
| Pigment Red 254, CI 56110 | 5,0 Gew.-% |

### Beispiel 1C:

Beispielrezeptur für eine grüne Kreide mit einem Durchmesser von 12,0 mm:

| | |
|---|---|
| Aluminiumdistearat (CAS-Nr. 300-92-5) | 3,0 Gew.-% |
| Ethylen-Maleinsäureanhydrid Copolymer (CAS-Nr. 9006-26-2) | 15,0 Gew.-% |
| Hartes pflanzliches Wachs Polycerin 9548¹⁾ | 25,0 Gew.-% |
| Talkum | 50,0 Gew.-% |
| Calciumstearat | 4,0 Gew.-% |
| Pigment Green 7, CI 74260 | 3,0 Gew.-% |

### Beispiel 1D:

Beispielrezeptur für eine gelbe Farbstiftmine mit einem Durchmesser von 3,3 mm:

| | |
|---|---|
| Aluminiumdistearat (CAS-Nr. 300-92-5) | 5,0 Gew.-% |
| Propylen-Maleinsäureanhydrid Copolymer (CAS-Nr. 25722-45-6) | 16,0 Gew.-% |
| Hartes pflanzliches Wachs Polycerin 9542¹⁾ | 30,0 Gew.-% |
| Kaolin | 28,0 Gew.-% |
| Magnesiummyristat | 4,0 Gew.-% |
| Dispergierhilfsmittel BYK Dispersplast 1142²⁾ | 2,0 Gew.-% |
| Pigment Yellow 42, CI 77492 | 15,0 Gew.-% |

### Beispiel 1E:

Beispielrezeptur für eine gelbe Farbstiftmine mit einem Durchmesser von 3,8 mm:

| | |
|---|---|
| Aluminiumdistearat (CAS-Nr. 300-92-5) | 4,5 Gew.-% |
| Ethylen-Maleinsäureanhydrid Copolymer (CAS-Nr. 9006-26-2) | 15,0 Gew.-% |
| Hartes pflanzliches Wachs Polycerin 9548¹⁾ | 3,0 Gew.-% |
| Titandioxid | 8,0 Gew.-% |
| Kaolin | 62,5 Gew.-% |
| Pigment Yellow 185, CI 56290 | 7,0 Gew.-% |

### Beispiel 1F:

Beispielrezeptur für eine Graphitmine mit einem Durchmesser von 3,0 mm:

| | |
|---|---|
| Aluminiumdistearat (CAS-Nr. 300-92-5) | 7,0 Gew.-% |
| Ethylen-Maleinsäureanhydrid Copolymer (CAS-Nr. 9006-26-2) | 20,0 Gew.-% |
| Hartes pflanzliches Wachs Polycerin RD 828¹⁾ | 15,0 Gew.-% |
| Graphitpulver | 18,0 Gew.-% |
| Ton | 40,0 Gew.-% |

Um die gegenüber dem aufgeführten Stand der Technik erreichbaren Verbesserungen durch die erfindungsgemäßen Minen darzulegen, wurden Vergleichsversuche mit Minen gemäß EP 2 520 442 B1, also Minen ohne funktionalisiertes Metallocen-Polyolefinwachs, und Minen gemäß
EP 3 772 532 B1, also Minen ohne Aluminiumdistearat, durchgeführt. Die Vergleichsrezepturen sind nachfolgend aufgelistet:

### Vergleichsbeispiel 2A:

Vergleichsrezeptur 2A gemäß EP 3 772 532 B1 für eine blaue Farbstiftmine mit einem Durchmesser von 4,0 mm:

| | |
|---|---|
| Ethylen-Maleinsäureanhydrid Copolymer | |
| (CAS 9006-26-2) | 9,5 Gew. % |
| Oxidiertes Ethylen Vinyl Acetat (EVA) Wachs (CAS 104912-80-3) | 1,2 Gew. % |
| Hartes pflanzliches Wachs Polycerin 9548 ¹⁾ | 12,3 Gew. % |
| Glimmer | 15,0 Gew. % |
| Kaolin | 57,0 Gew. % |
| Pigment Blue 15:1; CI 74160 | 5,0 Gew. % |

### Vergleichsbeispiel 2B:

Vergleichsrezeptur 2B gemäß EP 3 772 532 B1 für eine rote Farbstiftmine mit einem Durchmesser von 4,0 mm:

| | |
|---|---|
| Ethylen-Maleinsäureanhydrid Copolymer (CAS 9006-26-2) | 9,1 Gew. % |
| Oxidiertes Ethylen Vinyl Acetat (EVA) Wachs (CAS 104912-80-3) | 1,1 Gew. % |
| Hartes pflanzliches Wachs Polycerin 9548 ¹⁾ | 11,8 Gew. % |
| Glimmer | 15,0 Gew. % |
| Kaolin | 58,0 Gew. % |
| Pigment Red 254; CI 56110 | 5,0 Gew. % |

### Vergleichsbeispiel 3A:

Vergleichsrezeptur 3A gemäß EP 2 520 442 B1 für eine blaue Farbstiftmine mit einem Durchmesser von 4,0 mm:

| | |
|---|---|
| Aluminiumdistearat (CAS 300-92-5) | 1,2 Gew. % |
| Polyethylenwachs mit Sauerstoff enthaltenden funktionellen Gruppen (CAS 68441-17-8) | 9,5 Gew. % |
| Hartes pflanzliches Wachs Polycerin 9548 ¹⁾ | 2,3 Gew. % |
| Glimmer | 15,0 Gew. % |
| Kaolin | 57,0 Gew. % |
| Pigment Blue 15:1; CI 74160 | 5,0 Gew. % |

### Vergleichsbeispiel 3B:

Vergleichsrezeptur 3B gemäß EP 2 520 442 B1 für eine rote Farbstiftmine mit einem Durchmesser von 4,0 mm:

| | |
|---|---|
| Aluminiumdistearat (CAS 300-92-5) | 1,1 Gew. % |
| Polyethylenwachs mit Sauerstoff enthaltenden funktionellen Gruppen (CAS 68441-17-8) | 9,1 Gew. % |
| Hartes pflanzliches Wachs Polycerin 9548 ¹⁾ | 11,8 Gew. % |
| Glimmer | 15,0 Gew. % |
| Kaolin | 58,0 Gew. % |
| Pigment Red 254; CI 56110 | 5,0 Gew. % |

Um eine reproduzierbare Applikation der Minen auf Papier zu ermöglichen, wurde eine Vorrichtung zur Minenapplikation auf Papier verwendet. Mittels dieser Vorrichtung können sechs Farbaufträge gleichzeitig und unter vergleichbaren Bedingungen auf einen Maluntergrund, vorliegend Papier, aufgebracht werden. Hierzu werden die Minen in Halterungen gehalten, mit Gewicht beaufschlagt und mittels der Halterung über das Papier bewegt, um den Aufstrich zu erzeugen..

### Versuchsdurchführung

In der verwendeten Maschine zur Applikation von Graphit- und Farbstiftminen lagen Prüfplätze (Felder) für sechs Minen vor. Pro Feld wurde eine Fläche von 20,25 cm² aufgetragen, woraus sich eine Gesamtapplikationsfläche von 121,5 cm² ergab. Die getesteten Minen wiesen einen Durchmesser von 4,0 mm auf, wurden gespitzt und ein Plateau von 1 mm² wurde erzeugt. Anschließend wurden die Minenstücke in Messinghalterungen der Vorrichtung geklemmt und mit einem Gesamtgewicht von 570 g / Mine (Halterung 66 g + Belastungsgewicht 500 g + 4 g Minengewicht) belastet. Die Maschine applizierte sechs quadratische Flächen (je 20,25 cm²), wobei der Farbauftrag 10x von links nach rechts und zurück erfolgte.

Die Temperatur während der Applikation betrug 21 °C (+/- 1 °C), die Luftfeuchtigkeit 50 % rel. Luftfeuchtigkeit (+/- 5 %). Als Maluntergrund wurde Papier A4 Zeichenblock, Art. Nr.: 212046, Faber-Castell AG, D 90546 Stein bei Nürnberg verwendet.

### Ergebnisse der Vergleichsversuche

Zunächst wurden die Minen gemäß den erfindungsgemäßen Rezepturen 1A, 1B und gemäß den Vergleichsrezepturen 2A, 2B, 3A und 3B mit der gezeigten Vorrichtung auf das Papier aufgetragen.

Rein optisch waren bereits durch einen Vergleich der Varianten gemäß 1A, 1B, 2A, 2B, 3A und 3B die erfindungsgemäßen Minenaufstriche der Rezepturen 1A und 1B farbintensiver als die Vergleichsaufstriche zum bisherigen Stand der Technik (2A, 2B, 3A, 3B).

Die Ergebnisse sind in nachfolgender Tabelle zusammengefasst, wobei eine höhere Farbintensität durch eine höhere Anzahl an "+" gekennzeichnet ist:

**Tabelle 1:**

| | Erfindungsgemäße Mine | | Minen gemäß EP 3 772 532 B1 | | Minen gemäß EP 2 520 442 B1 | |
|---|---|---|---|---|---|---|
| | 1A (Farbe "Blau") | 1B (Farbe "Rot") | 2A (Farbe "Blau") | 2B (Farbe "Rot") | 3A (Farbe "Blau") | 3B (Farbe "Rot") |
| Farbintensität | +++ | +++ | + | + | + | + |

Durch einen Vergleich der applizierten Minenmasse kann ein objektiver Vergleich demonstriert werden, wie in der nachfolgenden Tabelle angeführt. Um die applizierte Minenmasse zu bestimmen, wurde das Papier jeweils vor und nach dem Auftrag der Mine gewogen. Die Gewichtsdifferenz entspricht dann der applizierten Minenmasse:

**Tabelle 2:**

| | Erfindungsgemäße Mine | | Minen gemäß EP 3 772 532 B1 | | Minen gemäß EP 2 520 442 B1 | |
|---|---|---|---|---|---|---|
| | 1A (Farbe "Blau") | 1B (Farbe "Rot") | 2A (Farbe "Blau") | 2B (Farbe "Rot") | 3A (Farbe "Blau") | 3B (Farbe "Rot") |
| applizierte Minenmasse | 107 mg | | 84 mg | | 99 mg | |
| applizierte Minenmasse | | 110 mg | | 77 mg | | 97 mg |
| Σ (1A+1B) | 217 mg | | 161 mg | | 197 mg | |

Mit den erfindungsgemäßen Minen lassen sich somit höhere Minenmassenmengen auf Papier applizieren. Somit zeigen die erfindungsgemäßen Minen ein weicheres Applikationsverhalten.

Um das Deckvermögen der erfindungsgemäßen Minen im Vergleich zum zitierten Stand der Technik zu vergleichen, wurden zunächst die roten Minen auf die Prüfplätze appliziert und anschließenden die blauen Minen darüber.

Durch einen optischen Vergleich war es möglich zu demonstrieren, dass die erfindungsgemäßen Minen zu homogeneren Flächen führen und zudem ein besseres Deckvermögen vorliegt als bei den Minen nach dem zitierten Stand der Technik. Auch hier ist eine bessere Homogenität bzw. ein besseres Deckvermögen durch eine höhere Anzahl an "+" gekennzeichnet.

**Tabelle 3:**

| | Erfindungsgemäße Mine | Minen gemäß EP 3 772 532 B1 | Minen gemäß EP 2 520 442 B1 |
|---|---|---|---|
| | Zunächst wurden rote Minen 1B appliziert. Danach wurde mit blauen Minen 1A darüber gezeichnet | Zunächst wurden rote Minen 2B appliziert. Danach wurde mit blauen Minen 2A darüber gezeichnet | Zunächst wurden rote Minen 3B appliziert. Danach wurde mit blauen Minen 3A darüber gezeichnet |
| Homogenität | +++ | + | ++ |
| Deckvermögen | +++ | + | ++ |

Auch hier wurden die applizierten Minenmassen verglichen, um einen objektiven Vergleich zu demonstrieren:

**Tabelle 4:**

| | Erfindungsgemäße Mine | Minen gemäß EP 3 772 532 B1 | Minen gemäß EP 2 520 442 B1 |
|---|---|---|---|
| | Zunächst wurden rote Minen 1B appliziert. Danach wurde mit blauen Minen 1A darüber gezeichnet | Zunächst wurden rote Minen 2B appliziert. Danach wurde mit blauen Minen 2A darüber gezeichnet | Zunächst wurden rote Minen 3B appliziert. Danach wurde mit blauen Minen 3A darüber gezeichnet |
| applizierte Minenmasse | 173 mg | 81 mg | 127 mg |

Der Versuch zeigte, dass mit den erfindungsgemäßen Minen deutlich mehr Minenmasse auf das Papier appliziert wurde als mit den Minen der Vergleichsrezepturen. Durch die deutlich höhere Gesamtminenmasse, die appliziert wurde, ist auch ableitbar, dass das Deckvermögen der erfindungsgemäßen Minen höher ist als bei den Vergleichsrezepturen.

Bei einem weiteren Versuch mit zunächst applizierten blauen Minen und anschließendem Übermalen mit den roten Minen, konnte das Ergebnis gemäß aus Tabelle 4 bestätigt werden.

**Tabelle 5:**

| | Erfindungsgemäße Mine | Minen gemäß EP 3 772 532 B1 | Minen gemäß EP 2 520 442 B1 |
|---|---|---|---|
| | Zunächst wurden blaue Minen 1A appliziert. Danach | Zunächst wurden blauen Mi- | Zunächst wurden blauen Mi- |
| | wurde mit roten Minen 1B darüber gezeichnet | nen 2A appliziert. Danach wurde mit roten Minen 2B darüber gezeichnet | nen 3A appliziert. Danach wurde mit roten Minen 3B darüber gezeichnet |
| applizierte Minenmasse | 162 mg | 116 mg | 132 mg |

### Hersteller:

1) Wachs-u. Ceresin-Fabriken Th. C. Tromm GmbH, D-50735 Köln
2) BYK-Chemie GmbH, D 46462 Wesel

## Patentansprüche

1. Farbstiftmine, Graphitmine, Farb- oder Graphitkreide zum Malen und/oder Zeichnen mit einer Minengrundmasse enthaltend Wachse, zumindest einen Füllstoff und zumindest ein Farbmittel, **dadurch gekennzeichnet, dass**
in der Minengrundmasse ferner Aluminiumdistearat enthalten ist und als Wachse zumindest ein funktionalisiertes Metallocen-Polyolefinwachs und zumindest ein gehärtetes Wachs enthalten sind.

2. Farbstiftmine, Graphitmine, Farb- oder Graphitkreide nach Anspruch 1,
**dadurch gekennzeichnet, dass**
Aluminiumdistearat mit einem Anteil von 0,4 bis 10,0 Gew.-% in der Minengrundmasse enthalten ist.

3. Farbstiftmine, Graphitmine, Farb- oder Graphitkreide nach einem der Ansprüche 1 oder 2,
**dadurch gekennzeichnet, dass**
das zumindest ein funktionalisierte Metallocen-Polyolefinwachs mit einem Anteil von 5,0 bis 25,0 Gew.-% in der Minengrundmasse enthalten ist.

4. Farbstiftmine, Graphitmine, Farb- oder Graphitkreide nach einem der vorhergehenden Ansprüche,
**dadurch gekennzeichnet, dass**
das zumindest eine funktionalisierte Metallocen-Polyolefinwachs einen Tropfpunkt zwischen 120 und 160 °C und eine Säurezahl zwischen 16 und 50 mg KOH/g aufweist.

5. Farbstiftmine, Graphitmine, Farb- oder Graphitkreide nach einem der vorhergehenden Ansprüche,
**dadurch gekennzeichnet, dass**
als funktionalisierte Metallocen-Polyolefinwachs Ethylen-Maleinsäureanhydrid Copolymer (CAS Nr. 9006-26-2) oder Propylen-Maleinsäureanhydrid Copolymer (CAS Nr. 25722-45-6) enthalten ist.

6. Farbstiftmine, Graphitmine, Farb- oder Graphitkreide nach einem der vorhergehenden Ansprüche,
**dadurch gekennzeichnet, dass**
das gehärte Wachs einen Tropfpunkt zwischen 50 und 120 °C (ISO 2176) und eine Säurezahl zwischen 1 und 11 mg KOH/g (ISO 2114) aufweisen.

7. Farbstiftmine, Graphitmine, Farb- oder Graphitkreide nach einem der vorhergehenden Ansprüche,
**dadurch gekennzeichnet, dass**
als gehärtes Wachs Palmwachs, Rapswachs, Sonnenblumenwachs, Sojawachs, Esterwachs, synthetisches Bienenwachs, Mantanwachs Paraffinwachs, Naturwachse, Carnaubawachs und / oder hydriertes Rhizinusöl und/oder gehärtete pflanzliche Trigylceride mit wachsähnlichen Strukturen auf Basis der aufgeführten Wachse enthalten ist.

8. Farbstiftmine, Graphitmine, Farb- oder Graphitkreide nach einem der vorhergehenden Ansprüche,
**dadurch gekennzeichnet, dass**
das gehärtete Wachs mit einem Anteil von 2,0 bis 30,0 Gew.-% in der Minengrundmasse enthalten ist.

9. Farbstiftmine, Graphitmine, Farb- oder Graphitkreide nach einem der vorhergehenden Ansprüche,
**dadurch gekennzeichnet, dass**
der zumindest eine Füllstoff mit einem Anteil von 5,0 bis 80 Gew.-% in der Minengrundmasse enthalten ist.

10. Farbstiftmine, Graphitmine, Farb- oder Graphitkreide nach einem der vorhergehenden Ansprüche,
**dadurch gekennzeichnet, dass**
als Füllstoff zumindest ein anorganischer Füllstoff, insbesondere Talkum, Bimsmehl, Kaolin, Glimmer, Aluminiumsilikat, Ton und/oder Calciumcarbonat, und/oder zumindest ein organischer Füllstoff, insbesondere Zellulosefasern, Holzfasern und/oder Textilfasern, und/oder zumindest ein anorganisches Pigment, insbesondere Titaniumdioxid, Zinkoxid und/oder Bariumsulfat, enthalten sind.

11. Farbstiftmine, Graphitmine, Farb- oder Graphitkreide nach einem der vorhergehenden Ansprüche,
**dadurch gekennzeichnet, dass**
als Farbmittel zumindest ein Farbstoff und/oder zumindest ein anorganisches Pigment und/oder zumindest ein organisches Pigment (in der Minengrundmasse enthalten ist.

12. Farbstiftmine, Graphitmine, Farb- oder Graphitkreide nach einem der vorhergehenden Ansprüche,
**dadurch gekennzeichnet, dass**
das zumindest eine Farbmittel mit einem Anteil von 0,1 - 50 Gew.-%, insbesondere ein Anteil von 0,1 - 40 Gew.-%, besonders bevorzugt ein Anteil von 0,1 - 30 Gew.-% in der Minengrundmasse enthalten ist.

13. Farbstiftmine, Graphitmine, Farb- oder Graphitkreide nach einem der vorhergehenden Ansprüche,
**dadurch gekennzeichnet, dass**
in der Minengrundmasse zumindest ein Additiv, insbesondere ein Gleitmittel und/oder ein Dispergierhilfsmittel, enthalten ist.

14. Farbstiftmine, Graphitmine, Farb- oder Graphitkreide nach Anspruch 13,
**dadurch gekennzeichnet, dass**
das Additiv mit einem Anteil von maximal 5,0 Gew.-% in der Minengrundmasse enthalten ist.
